# EUROPÄISCHE PATENTSCHRIFT

(11) **EP 1 999 398 B1**
(45) Veröffentlichungstag und Bekanntmachung des Hinweises auf die Patenterteilung: **05.05.2010**
(21) Anmeldenummer: 07704260.4
(22) Anmeldetag: 31.01.2007
(51) Int. Cl.: F16H 55/17, F16H 57/02

(54) **ZAHNRAD**
TOOTHED WHEEL
ROUE DENTEE

(30) Priorität: 21.03.2006 DE 102006012861
(43) Veröffentlichungstag der Anmeldung: 10.12.2008
(73) Patentinhaber: Robert Bosch GmbH, 70442 Stuttgart (DE)
(72) Erfinder: TASCH, Franz, 76287 Rheinstetten (DE); HAUSSECKER, Walter, 77830 Buehlertal (DE); FIEDLER, Max, 77833 Ottersweier-Unzhurst (DE); KRIEG, Martin, 76571 Gaggenau (DE)
(86) Internationale Anmeldenummer: PCT/EP2007/050935
(87) Internationale Veröffentlichungsnummer: WO 2007/113027

(56) Entgegenhaltungen:
- GB-A- 2 126 686
- US-A1- 6 070 484
- US-A1- 2002 014 133
- US-A1- 2004 187 622

## Beschreibung

### Stand der Technik

Die Erfindung betrifft ein Zahnrad mit einem Zahnkranz gemäß dem Oberbegriff des Anspruchs 1.

Aus der gattungsgemäßen EP 0 875 697 A2 sowie der DE 102 46 711 A1 sind Zahnräder für Schneckengetriebe, insbesondere für Verstelleinrichtungen in Kraftfahrzeugen, bekannt. Die bekannten Zahnräder weisen einen radial äußeren Zahnkranz mit einer Außenverzahnung auf, wobei der Zahnkranz aus zwei koaxial zueinander angeordneten Wänden gebildet ist. Der Zahnkranz stützt sich über radial verlaufende, gleichmäßig in Umfangsrichtung beabstandete Stege an einer Zahnradnabe mit zwei gegenüberliegenden Öffnungen ab. Die Stege sind auf einer sich über den Umfang erstreckenden Rückwand angeordnet, die den Zahnkranz und die Zahnradnabe zusätzlich miteinander verbindet. Bei der Herstellung des bekannten Zahnrades, insbesondere in Kunststoff-Spritzgusstechnik, wird die Rundheit des Zahnradnabenkanals durch den Schwund der radial verlaufenden Stege während des Abkühlprozesses negativ beeinflusst. Dies ist insbesondere an den Öffnungen des Zahnradnabenkanals nachteilig, da hierdurch das Zahnrad ungleichmäßig über den im Zahnradnabenkanal aufgenommenen Lagerbolzen abrollt und gegenüber dem Lagerbolzen verkippen kann. Hieraus resultiert ein erhöhter Verschleiß sowie eine erhöhte Geräuschentwicklung.

Aus der DE 102 28 705 A1 ist ebenfalls ein Zahnrad mit einem Zahnkranz und einer Zahnradnabe bekannt. Wie aus Fig. 1 der DE 102 28 705 A1 ersichtlich ist, sind in die Nabe in axialer Richtung verlaufende, in Umfangsrichtung durch Stege voneinander getrennte Vertiefungen mit unterschiedlichen Abmessungen in radialer Richtung vorgesehen. Auch bei diesem bekannten Zahnrad kommt es aufgrund des Verzugs von radialen Stegen beim Abkühlprozess zu negativen Auswirkungen auf die Rundheit des Zahnradnabenkanals.

Mit der GB 2126866 A ist ein Getriebe-Zahnrad bekannt geworden, das mit einer Nabe auf einer Welle drehfest gelagert ist und am äußeren Umfang einen Zahnkranz aufweist. Die Nabe ist mit einer Vielzahl von Speichen mit dem Zahnkranz verbunden, wobei am Nabenteil ringförmig umlaufende Nuten angeformt sind.

### Offenbarung der Erfindung

Der Erfindung liegt die Aufgabe zugrunde, ein Zahnrad mit verbesserter Rundheitsgüte im Bereich zumindest einer Öffnung des Zahnradnabenkanals vorzuschlagen.

Diese Aufgabe wird mit den Merkmalen des Anspruches 1 gelöst.

Vorteilhafte Weiterbildungen der Erfindung sind in den Unteransprüchen angegeben.

Der Erfindung liegt der Gedanke zugrunde, benachbart und mit radialem Abstand zu der mindestens einen Öffnung des Zahnradnabenkanals eine in Umfangsrichtung geschlossene und sich in axialer Richtung erstreckende, insbesondere schmale Ringnut vorzusehen. Durch diese. Ringnut wird der Öffnungsbereich des Zahnradnabenkanals von den radial verlaufenden Stegen entkoppelt, wodurch ein Verzug des Öffnungsbereiches des Zahnradnabenkanals bei dem Abkühlprozess vermieden oder zumindest reduziert wird. Hierdurch ist die Rundheitsgüte des Zahnradnabenkanals im Öffnungsbereich verbessert bzw. erhöht, wodurch das Zahnrad gleichmäßiger über einen im Zalmradnabenkanal geführten Lagerbolzen abrollt. Auch ein Verkippen des Zahnrades auf dem Lagerbolzen wird verhindert oder zumindest reduziert. Hierdurch wird der Zahneingriff einer mit dem Zahnrad kämmenden Schnecke optimiert. Gleichlaufschwankungen des das Zahnrad antreibenden Elektromotors werden verbessert, wodurch zusätzlich die Geräuschentwicklung des Motors gleichmäßiger, insbesondere auch reduziert wird. Aufgrund der Erfindung wird die Qualität des Zahnradnabenkanals in der Großserie verbessert.

Die Erfindung bezieht sich jedoch nicht nur auf aus Kunststoff im Wege eines Spritzgussverfahrens hergestellte Zahnräder, sondern auf Zahnräder aus sämtlichen bekannten thermoplastischen und/oder duroplastischen Materialien sowie auf Zahnräder aus Metall. Durch das Vorsehen einer Ringnut wird der negative Einfluss von in radialer Richtung verlaufenden Stegen auf die Rundheit des Zahnradnabenkanals im Bereich der mindestens einen Öffnung reduziert.

Besonders gute Ergebnisse werden erzielt, wenn die Ringnut symmetrisch ausgebildet ist. Insbesondere ist die Ringnut in Weiterbildung der Erfindung kreisringförmig mit konstanter Nutbreite ausgeformt und koaxial zu dem Zahnradnabenkanal angeordnet.

Bevorzugt sind Stege mit der Rückwand verbunden und erstrecken sich von dieser ausgehend in zumindest eine Axialrichtung. Die von den Stegen und der Rückwand begrenzten, in Umfangsrichtung beabstandeten Kammern dienen zur Aufnahme von Mitnehmern und/oder Dämpfungselementen.

Gemäß einer bevorzugten Ausführungsform ist die Ringnut in die Rückwand eingebracht, insbesondere derart, dass die Ringnut in radialer Richtung gesehen zwischen dem Zahnradnabenkanal und dem Abstützbereich der Stege an der Zahnradnabe angeordnet ist. Es kann auch vorteilhaft sein, dass die Ringnut in radialer Richtung gesehen unmittelbar benachbart zu der Zahnradnabe angeordnet ist oder sich in radialer Richtung in diesen Bereich hinein erstreckt.

Um eine möglichst ebene Rückseite des Zahnrades zu erhalten ist es vorteilhaft, wenn sich die in radialer Richtung verlaufenden, die Zahnradnabe und den Zahnkranz miteinander verbindenden Stege lediglich auf einer Seite der Rückwand angeordnet sind, also sich lediglich von der Rückwand in eine Axialrichtung erstrecken. Dies ist insbesondere dann von Vorteil, wenn die Rückwand in axialer Richtung gesehen nicht mittig auf der Zahnradnabe sitzt, sondern zu einer Zahnradseite, insbesondere zur Zahnradrückseite hin, versetzt angeordnet ist.

In Ausgestaltung der Erfindung ist vorgesehen, dass die Ringnut auf der den Stegen abgewandten Rückseite der Rückwand angeordnet ist. Mit dieser Rückseite liegt das Zahnrad üblicherweise an einem Bauteil, insbesondere einem Getriebegehäuse eines Schneckengetriebes, an, so dass es insbesondere auf dieser Seite auf eine möglichst exakte Rundheit im Bereich der Öffnung des Zahnradnabenkanals ankommt.

Zur verbesserten und reibungsarmen Anlage des Zahnrades an einem Bauteil ist auf der Rückseite des Zahnrades eine in axialer Richtung gegenüber der Rückwand erhabene, ringförmige Anlagefläche vorgesehen, mit der das Zahnrad an dem Bauteil in Umfangsrichtung entlang gleitet und in axialer Richtung abstützt. In Weiterbildung der Erfindung ist vorgesehen, dass sich die Anlagefläche radial außerhalb der Ringnut, insbesondere unmittelbar benachbart zu der Ringnut befindet. Bevorzugt erstreckt sich die Anlagefläche auch auf einen radial inneren Bereich der Ringnut, also dem Ringbereich zwischen Ringnut und Öffnung des Zahnradnabenkanals.

Um mögliche Stabilitätseinbußen durch das Vorsehen der erfindungsgemäßen Ringnut so gering wie möglich zu halten, ist die Nut, relativ zu der Axialerstreckung der Zahnradnabe von geringer Tiefe. Insbesondere ist die Tiefe der Ringnut in axialer Richtung geringer als die Dicke der Rückwand in axialer Richtung.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines geschnittenen Zahnrades schräg auf die Zahnradrückseite, und
- Fig. 2: eine perspektivische Ansicht des Zahnrades schräg auf seine Vorderseite.

### Ausführungsformen der Erfindung

In den Figuren sind gleiche Bauteile und Bauteile mit gleicher Funktion mit den gleichen Bezugszeichen gekennzeichnet.

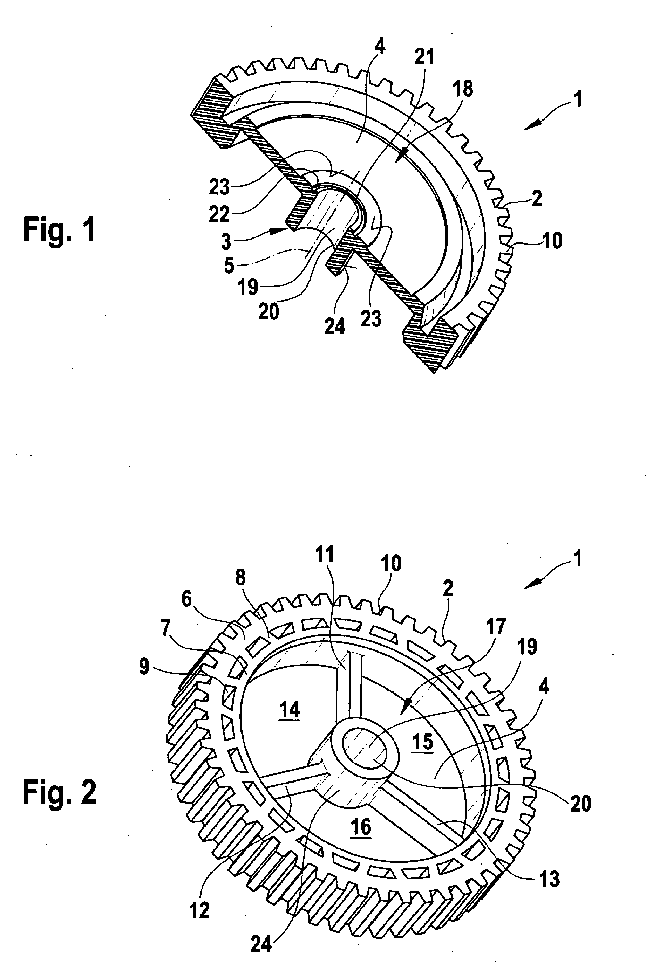

In den Fig. 1 und 2 ist ein Zahnrad 1 mit einem Zahnkranz 2, einer zentrischen Zahnradnabe 3 und einer die Zahnradnabe 3 mit dem Zahnkranz 2 verbindenden, sich in Umfangsrichtung erstreckenden Rückwand 4 gezeigt. Das Zahnrad 1 ist um eine Drehachse 5 drehbar.

Aus der detaillierten Fig. 2 ist ersichtlich, dass der Zahnkranz 2 von zwei umfänglich geschlossenen, sich in axialer Richtung, das heißt senkrecht zur Rückwand 4 erstreckenden, koaxial zueinander angeordneten Wänden 6, 7 gebildet ist. Die beiden Wände 6, 7 sind über eine Vielzahl von in Umfangsrichtung beabstandeter kleiner, winklig zum Radius angeordneter Stege 8 miteinander verbunden, wobei hierdurch wabenartige Ausnehmungen 9 zwischen den Wänden 6, 7 gebildet sind. Durch diese Ausbildung des Zahnkranzes 2 mit seiner Außenverzahnung 10 wird die Stabilität des Zahnrades 1, insbesondere des Zahnkranzes 2, gegenüber von außen in radialer Richtung nach innen wirkenden Belastungen, durch eine kämmende Verbindung mit einem weiteren verzahnten Bauteil, insbesondere einer Getriebeschnecke, erhöht. Anstelle einer Außenverzahnung 10 kann beispielsweise auch eine Innenverzahnung vorgesehen werden.

Wie sich aus Fig. 2 ergibt, ist der Zahnkranz 2 bzw. die radial innere Wand 7 mittels dreier um 120° in Umfangsrichtung zueinander versetzte, radial verlaufende Stege 11, 12, 13 mit der Zahnradnabe verbunden. Hierdurch stützt sich der Zahnkranz 2 in radialer Richtung gegen die Zahnradnabe 3 ab. Die drei Stege 11, 12, 13 sind mit der in axialer Richtung außermittig angeordneten Rückwand 4 verbunden und bilden zusammen mit der Rückwand 4 sowie der inneren Wand 7 des Zahnkranzes 2 und dem Außenumfang der Zahnradnabe 3 drei gleich große in Umfangsrichtung beabstandete Kammern 14, 15, 16 aus, die zur Aufnahme von nicht dargestellten Mitnehmerelementen, insbesondere einer Abtriebswelle eines Elektromotors, dienen. Ebenfalls sind in diesen Kammern 14, 15, 16 üblicherweise Dämpfungselemente zur Dämpfung von sich plötzlich ändernden Antriebs- oder Abtriebsmomenten vorgesehen.

Die Stege 11, 12, 13 sind lediglich auf der Vorderseite 17 der Rückwand 4 angeordnet. Die der Vorderseite 17 gegenüberliegende Rückseite 18 des Zahnrades 1 ist im Gegensatz zur Vorderseite 17 relativ eben ausgebildet.

Durch den Schwund der radial verlaufenden, sich an der Zahnradnabe 3 abstützenden Stege 11, 12, 13 wird die Rundheit des zentrisch innerhalb der Zahnradnabe 3 angeordneten Zahnradnabenkanals 19 mit seinen zwei gegenüberliegenden Öffnungen 20, 21 negativ beeinflusst.

Um die Rundheit der auf der Rückseite 18 des Zahnrades 1 vorgesehenen Öffnung 21 des Zahnradnabenkanals 19 zu verbessern, ist mit geringem Radialabstand zu der Öffnung 21 eine umlaufende Ringnut 22 in die Zahnradnabe 3 bzw. die Rückwand 4 eingebracht. Die Ringnut 22 ist koaxial zur Drehachse 5 angeordnet, kreisringförmig ausgebildet und weist eine konstante Breite in radialer sowie eine konstante Tiefe in axialer Richtung auf. Die Ringnut 22 liegt innerhalb einer Anlagefläche 23, die sich radial zu beiden Seiten der Ringnut 22 in Umfangsrichtung jeweils kreisringförmig erstreckt. Die Anlagefläche 23 ist leicht in axialer Richtung erhaben gegenüber der Rückwand 4 ausgebildet und weist eine glatte Oberfläche auf.

Bei Bedarf kann auch eine Ringnut rund um die der Öffnung 21 gegenüberliegende Öffnung 20 des Zahnradnabenkanals 19 in die Zahnradnabe 3 eingebracht werden.

Bei dem gezeigten Ausführungsbeispiel ist die Ringnut 22 in einem Bereich in radialer Richtung gesehen zwischen der Öffnung 21 bzw. dem Zahnradnabenkanal 19 und der äußeren Umfangsfläche 24 der Zahnradnabe 3 angeordnet, also radial innerhalb des Kontaktbereiches der Stege 11, 12, 13 mit der Zahnradnabe 3.

Das gezeigte Zahnrad 1 ist einteilig aus Kunststoff, insbesondere POM, im Spritzgussverfahren gefertigt. Durch das erfindungsgemäße Vorsehen der Ringnut mit geringem Abstand zu der Öffnung 21 wird die Güte des Zahnradnabenkanals 19 im Bereich der Öffnung 21 verbessert.

## Patentansprüche

1. Zahnrad (1) mit einem Zahnkranz (2) und einer Zahnradnabe (3) mit einem axialen Zahnradnabenkanal (19) mit mindestens einer Öffnung (20, 21) sowie mit mindestens zwei in Umfangsrichtung beabstandeten, die Zahnradnabe (3) mit dem Zahnkranz (2) in radialer Richtung verbindenden Stegen (11, 12, 13), wobei der Zahnkranz (2) und die Zahnradnabe (3) durch eine an den Zahnkranz (3) sowie die Zahnradnabe (2) angeformte und sich über den Umfang erstreckende Rückwand (4) verbunden sind, **dadurch gekennzeichnet,dass** mit radialem Abstand rund um die Öffnung (20, 21) eine (22) Ringnut vorgesehen ist.

2. Zahnrad nach Anspruch 1, **dadurch gekennzeichnet, dass** die Ringnut (22) kreisringförmig mit konstanter Nutbreite ausgeformt und koaxial zu dem Zahnradnabenkanal (19) angeordnet ist.

3. Zahnrad nach einem der vorhergehenden Ansprüche, **dadurch gekennzeichnet, dass** die Rückwand (4) in axialer Richtung außermittig angeordnet ist

4. Zahnrad nach Anspruch 1, **dadurch gekennzeichnet, dass** die Ringnut (22) in die Rückwand (4) eingebracht ist.

5. Zahnrad nach einem der vorhergehenden Ansprüche, **dadurch gekennzeichnet, dass** die Ringnut (22) radial zwischen dem Zahnradnabenkanal (19) und dem Abstützbereich der Stege (11, 12, 13) an der Zahnradnabe (3) angeordnet ist.

6. Zahnrad nach einem der Ansprüche 1 oder 3 bis 5, **dadurch gekennzeichnet, dass** die Stege (11, 12, 13) lediglich auf einer Seite (17) der Rückwand (4) angeordnet sind.

7. Zahnrad nach Anspruch 6, **dadurch gekennzeichnet, dass** die Ringnut (22) auf der den Stegen (11, 12, 13) abgewandten Rückseite (18) der Rückwand (4) angeordnet ist.

8. Zahnrad nach einem der vorhergehenden Ansprüche, **dadurch gekennzeichnet, dass** radial außerhalb der Ringnut (22), vorzugsweise unmittelbar benachbart zur Ringnut (22), eine in axialer Richtung gegenüber der Rückwand (4) erhabene, ringförmige Anlagefläche (23) vorgesehen ist.

9. Zahnrad nach Anspruch 8, **dadurch gekennzeichnet, dass** die Ringnut (22) innerhalb der Anlagefläche (23) angeordnet ist.

10. Zahnrad nach einem der Ansprüche 5 bis 9, **dadurch gekennzeichnet, dass** die Tiefe der Ringnut (22) in axialer Richtung geringer ist als die Dicke der Rückwand (4) in axialer Richtung.

11. Schneckengetriebe mit einem als Zahnrad (1) gemäß einem der vorhergehenden Ansprüche ausgebildeten Schneckenrad.

## Claims

1. Toothed wheel (1) having a toothed ring (2) and having a toothed wheel hub (3) with an axial toothed wheel hub channel (19) with at least one opening (20, 21), and also having at least two webs (11, 12, 13) which are spaced apart in the circumferential direction and which connect the toothed wheel hub (3) to the toothed ring (2) in the radial direction, with the toothed ring (2) and the toothed wheel hub (3) being connected by means of a rear wall (4) which is integrally formed on the toothed ring (2) and on the toothed wheel hub (3) and which extends over the circumference, **characterized in that** an annular groove (22) is provided all the way around the opening (20, 21) and with a radial spacing to the latter.

2. Toothed wheel according to Claim 1, **characterized in that** the annular groove (22) is formed in the shape of a circular ring with a constant groove width and is arranged coaxially with respect to the toothed wheel hub channel (19).

3. Toothed wheel according to one of the preceding claims, **characterized in that** the rear wall (4) is arranged eccentrically in the axial direction.

4. Toothed wheel according to Claim 1, **characterized in that** the annular groove (22) is formed into the rear wall (4).

5. Toothed wheel according to one of the preceding claims, **characterized in that** the annular groove (22) is arranged on the toothed wheel hub (3) radially between the toothed wheel hub channel (19) and the support region of the webs (11, 12, 13).

6. Toothed wheel according to one of Claims 1 or 3 to 5, **characterized in that** the webs (11, 12, 13) are arranged only on one side (17) of the rear wall (4).

7. Toothed wheel according to Claim 6, **characterized in that** the annular groove (22) is arranged on the rear side (18), which faces away from the webs (11, 12, 13), of the rear wall (4).

8. Toothed wheel according to one of the preceding claims, **characterized in that** an annular contact surface (23) which is elevated in the axial direction in relation to the rear wall (4) is provided radially outside the annular groove (22), preferably directly adjacent to the annular groove (22).

9. Toothed wheel according to Claim 8, **characterized in that** the annular groove (22) is arranged within the contact surface (23).

10. Toothed wheel according to one of Claims 5 to 9, **characterized in that** the depth of the annular groove (22) in the axial direction is smaller than the thickness of the rear wall (4) in the axial direction.

11. Worm gear transmission having a worm wheel designed as a toothed wheel (1) according to one of the preceding claims.

## Revendications

1. Roue dentée (1) comprenant une couronne dentée (2) et un moyeu de roue dentée (3) avec un canal de moyeu de roue dentée axial (19) avec au moins une ouverture (20, 21) ainsi qu'au moins deux nervures (11, 12, 13) espacées dans la direction périphérique, reliant le moyeu de roue dentée (3) à la couronne dentée (2) dans la direction radiale, la couronne dentée (2) et le moyeu de roue dentée (3) étant connectés par une paroi arrière (4) façonnée sur la couronne dentée (2) et sur le moyeu de roue dentée (3) et s'étendant sur la périphérie, **caractérisée en ce qu'**une rainure annulaire (22) est prévue à distance radiale autour de l'ouverture (20, 21).

2. Roue dentée selon la revendication 1, **caractérisée en ce que** la rainure annulaire (22) est formée sous forme de bague annulaire de largeur de rainure constante et est disposée coaxialement au canal de moyeu de roue dentée (19).

3. Roue dentée selon l'une quelconque des revendications précédentes, **caractérisée en ce que** la paroi arrière (4) est disposée de manière décentrée dans la direction axiale.

4. Roue dentée selon la revendication 1, **caractérisée en ce que** la rainure annulaire (22) est pratiquée dans la paroi arrière (4).

5. Roue dentée selon l'une quelconque des revendications précédentes, **caractérisée en ce que** la rainure annulaire (22) est disposée radialement entre le canal de moyeu de roue dentée (19) et la région de support des nervures (11, 12, 13) sur le moyeu de roue dentée (3).

6. Roue dentée selon l'une quelconque des revendications 1 ou 3 à 5, **caractérisée en ce que** les nervures (11, 12, 13) sont seulement disposées sur un côté (17) de la paroi arrière (4).

7. Roue dentée selon la revendication 6, **caractérisée en ce que** la rainure annulaire (22) est disposée sur le côté arrière (18) de la paroi arrière (4) opposé aux nervures (11, 12, 13).

8. Roue dentée selon l'une quelconque des revendications précédentes, **caractérisée en ce qu'**une surface d'appui (23) de forme annulaire, rehaussée dans la direction axiale par rapport à la paroi arrière (4), est prévue radialement à l'extérieur de la rainure annulaire (22), de préférence directement à côté de la rainure annulaire (22).

9. Roue dentée selon la revendication 8, **caractérisée en ce que** la rainure annulaire (22) est disposée à l'intérieur de la surface d'appui (23).

10. Roue dentée selon l'une quelconque des revendications 5 à 9, **caractérisée en ce que** la profondeur de la rainure annulaire (22) dans la direction axiale est plus petite que l'épaisseur de la paroi arrière (4) dans la direction axiale.

11. Engrenage à vis sans fin comprenant une roue à denture hélicoïdale réalisées sous forme d'une roue dentée (1) selon l'une quelconque des revendications précédentes.
